# EUROPEAN PATENT APPLICATION

(11) **EP 1 937 022 A2**
(43) Date of publication of application: **25.06.2008**
(21) Application number: 07076082.2
(22) Date of filing: 12.12.2007
(51) Int. Cl.: H04Q 7/38

(54) **Neighboring cell list setting method terminal server and mobile communication network**

(30) Priority: 18.12.2006 JP 2006340064
(71) Applicant: NEC Corporation, Minato-ku Tokyo (JP)
(72) Inventor: Okabe, Yoshihide, Minato-ku Tokyo (JP)
(74) Representative: Wenzel & Kalkoff

(57) **Abstract**

An optimization terminal 100, connected to a mobile communication network, generates neighboring cell list of a wireless base station 103 specified to be added and a wireless base station 104 neighboring to the wireless base station 103 specified to be added, based on the location relation between the specified wireless base station 103 and the neighboring wireless base station 104 and statistical information (trial handover frequency, etc.), and sends the generated neighboring cell list(s) to a maintenance server 101. The maintenance server 101 uses the neighboring cell list(s), received from the optimization terminal 100, to update the neighboring cell list(s) of the wireless base stations 103 and 104. After updating the neighboring cell list(s), the operation of the added wireless base station 103 is started and, as necessary, the running test is made using a measuring vehicle.

## Description

### REFERENCE TO RELATED APPLICATION

The present application claims priority of the earlier Japanese patent application No. 2006-340064 filed on December 18, 2006, the entire disclosure thereof being incorporated herein by reference thereto.

### FIELD OF THE INVENTION

The present invention relates to a method for setting neighboring cell list(s) provided from a wireless (radio) base station to a mobile terminal in a mobile communication network and to a neighboring cell setting terminal, a maintenance server, and a mobile communication network for setting the neighboring cell list(s).

### BACKGROUND OF THE INVENTION

When a wireless base station is added to a conventional mobile communication network (hereinafter, a wireless base station that is added is also called an "added station" and an existing wireless base station is also called an "existing station"), the operation is started with the operating conditions, such as antenna angle adjustment and transmission power setting, provisionally set up. After that, the running test is made by a measuring vehicle that drives around the added station. Based on the analysis result of this running test, the neighboring cell list is updated, the running test is made on the same driving route to check if there is an improvement effect and, if there is no such effect, the neighboring cell list is updated again. The update of this cell neighboring list is repeated until an omission or the priority setting in the initialization is corrected.

Although Patent Document 1 does not mention the setting of neighboring cell list that is performed when a base station is added as described above, the document discloses the importance of the optimization of the neighboring cell list and a method for optimizing the neighboring cell list during the operation.

[Patent Document 1] JP Patent Kohyo Publication No. JP-P2005-522156A

### SUMMARY OF THE DISCLOSURE

The entire disclosures of the above-mentioned Patent Document are herein incorporated by reference thereto. The following analysis is given by the present invention. Although the running test described above is efficient means for detecting an omission (more specifically, an omission of a cell that should be added to the neighboring cell list but that is not added) in the initialization of the wireless base stations near an added wireless base station, the problem is that there is a period of time during which the network cannot fully demonstrate the true quality until a fault is found by the running test. If an improvement effect is immediately confirmed by updating the neighboring cell list, there is no problem. However, if the effect is not sufficiently improved, the period of time during which the network does not demonstrate the true quality becomes longer.

Another problem is that the running test by means of a measuring vehicle requires much time and money. So there is a requirement for a simple, efficient method for setting the neighboring cell list.

In view of the foregoing, it is an object of the present invention to provide a neighboring cell list setting method for increasing the efficiency of the network quality improvement work and to provide a neighboring cell setting terminal, a maintenance server, and a mobile communication network used for performing this method.

In accordance with a first aspect of the present invention, there is provided a neighboring cell list setting method for use in a mobile communication network where a mobile terminal performs a neighboring cell search based on at least a neighboring cell list received from a wireless base station. The neighboring cell list setting method comprises generating, by a neighboring cell setting terminal connected to the mobile communication network, at least a neighboring cell list of any specified wireless base station and wireless base station(s) neighboring to the specified wireless base station, based on a location relation between the specified wireless base station and wireless base station(s) around the specified wireless base station, and sending the generated neighboring cell list(s) to a maintenance server of the mobile communication network. Updating is performed by the maintenance server, the neighboring cell list(s) of each of the wireless base stations using the neighboring cell list(s) received from the neighboring cell setting terminal.

In accordance with a second aspect of the present invention, there is provided a neighboring cell setting terminal connected to a mobile communication network where a mobile terminal performs a neighboring cell search based on at least a neighboring cell list received from any wireless base station. The neighboring cell setting terminal comprises: neighboring cell list generation means that generates at least a neighboring cell list of a specified wireless base station and wireless base station(s) neighboring to the specified wireless base station based on a location relation between the specified wireless base station and the wireless base station(s) around the specified wireless base station; and neighboring cell list sending means that sends the neighboring cell list(s) of each of wireless base station(s) to a maintenance server of the mobile communication network. There is also provided a maintenance server that provides information, used to generate at least a neighboring cell list, to the neighboring cell setting terminal.

In accordance with a third aspect of the present invention, there is provided a mobile communication network to which the neighboring cell setting terminal described above is connected.

The meritorious effects of the present invention are summarized as follows.
The present invention allows at least a neighboring cell list of any wireless base station to be set completely i.e., without omission. The method according to the present invention, when used for adding a wireless base station, can prevent the network quality from being temporarily degraded before a running test.

The present invention increases the efficiency of the neighboring cell setting optimization work that is performed by a running test. The reason is that the running test that is made after completely setting the neighboring cell list(s) eliminates the need for extensively changing the neighboring cell list(s).

### BRIEF DESCRIPTION OF THE DRAWINGS

FIG. 1 is a diagram showing the general configuration of a mobile communication network used in a first exemplary embodiment of the present invention.
FIG. 2 is a flowchart showing a sequence of operations from the time the creation of at least a neighboring cell list is requested to the time the neighboring cell list is updated in a first exemplary embodiment of the present invention.
FIG. 3 is a diagram showing an example of neighboring cell list creation processing.
FIG. 4 is a diagram showing the general configuration of a mobile communication network used in a second exemplary embodiment of the present invention.
FIG. 5 is a flowchart showing a sequence of operations from the time the creation of at least a neighboring cell list is requested to the time the neighboring cell list is updated in a second exemplary embodiment of the present invention.

### PREFERRED MODES OF THE INVENTION

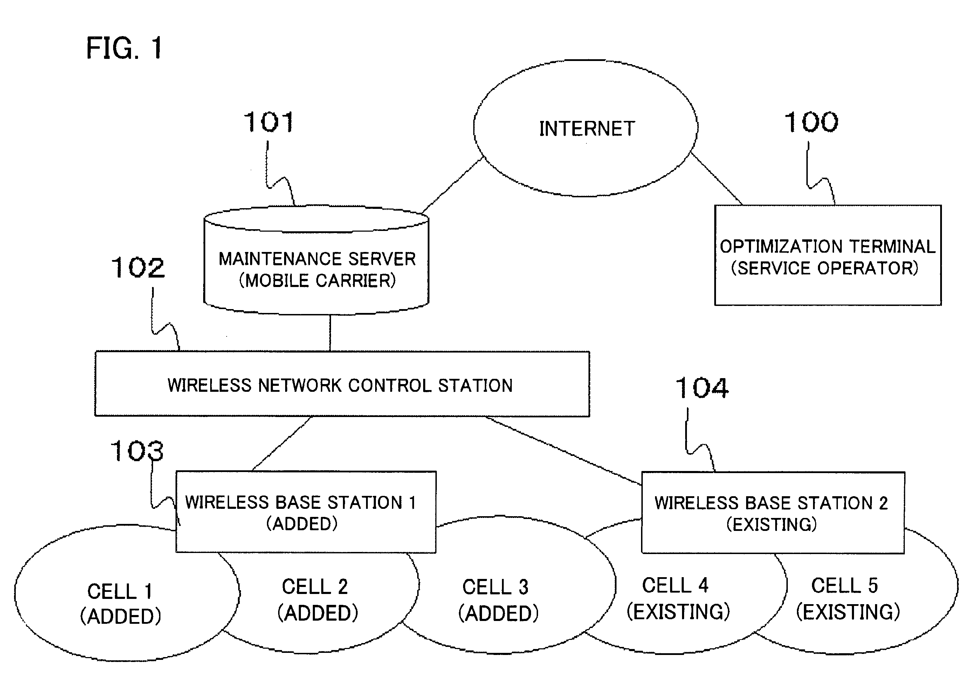

Preferred modes are mentioned first.
The location relation between the specified wireless base station and the wireless base station(s) around the specified wireless base station may be provided as additional information on the specified wireless base station; the neighboring cell setting terminal generates and sends at least a neighboring cell list that may be set when at least one wireless base station is added, and the maintenance server may use the neighboring cell list(s) to update the neighboring cell list(s) of the added wireless base station and wireless base station(s) neighboring to the added wireless base stations, respectively. (Mode 1)
The neighboring cell setting terminal may use not only the location relation between the specified wireless base station and the wireless base station(s) around the specified wireless base station but also statistical information on existing cells around the specified wireless base station to determine the order of cells in the neighboring cell list(s). (Mode 2)
The statistical information may include information on a trial handover frequency of each mobile terminal in each cell; and the neighboring cell setting terminal may rank a cell, whose trial handover frequency is higher, in a higher position in the neighboring cell list(s). (Mode 3)
The neighboring cell setting terminal may generate at least a neighboring cell list including cells of a plurality of mobile communication networks and may send the generated neighboring cell list(s) to a maintenance server of each of the mobile communication networks; and the maintenance server of each of the mobile communication networks may use the neighboring cell list(s) to update the neighboring cell list(s) in each of the wireless base station(s). (Mode 4)
The neighboring cell setting terminal may be connected to a plurality of mobile communication networks; the neighboring cell list generation means may generate at least a neighboring cell list including cells of the plurality of mobile communication networks; and the neighboring cell list sending means may send the neighboring cell list to a maintenance server of each of the mobile communication networks. (Mode 5)
There is provided a maintenance server that can provide a specification of a wireless base station and a location relation of the wireless base station(s) around the wireless base station to the neighboring cell setting terminal as mentioned herein (second aspect and Modes 1-5).
There is provided a maintenance server that may collect statistical information on existing cells of each wireless base station; and may provide statistical information, related to the specified wireless base station, to the neighboring cell setting terminal as mentioned herein (second aspect and Modes 2-5).
There is provided a mobile communication network to which the neighboring cell setting terminal as mentioned herein (second aspect and Modes 1-5) may be connected.
Next, preferred exemplary embodiments of the present invention will be described more in detail with reference to the drawings. FIG. 1 is a diagram showing the general configuration of a mobile communication network in a first exemplary embodiment of the present invention. Referring to FIG. 1, a mobile communication network in this exemplary embodiment comprises an optimization terminal (neighboring cell setting terminal) 100, a maintenance server 101, a wireless network control station 102, a wireless base station(1) 103 to be added, and an existing wireless base station(2) 104.

The optimization terminal 100, an information processing device such as a commercially available personal computer, is installed in the service operator side that provides the neighboring cell list optimization service. This optimization terminal 100, in which the map database of the service coverage area of a mobile communication operator (termed as "mobile carrier") is installed in advance, can display map data on any given area. The optimization terminal 100 also has a function to access additional information, provided in the maintenance server 101 by the mobile carrier, via the Internet and display the additional information onto the map data.

The additional information is as follows. The additional information includes information on the location of, for instance, a wireless base station 103 to be added, its cell initialization, information on the location of, for instance, the existing wireless base station 104 operating in the nearby areas, and its cell initialization.

The optimization terminal 100 has a function (neighboring cell list generation means) to generate at least a neighboring cell list based on the additional information such as the one described above and a function (neighboring cell list transmission means) to transmit generated neighboring cell list(s) to the maintenance server 101 via the Internet. The detail of each of the means, which will be described later, is implemented by a computer program executed on the optimization terminal 100.

Although one service operator (optimization terminal 100) is enough to achieve the object of the present invention according to its basic principle, the participation of multiple service operators gives the mobile carrier higher-quality services. In the description below, it is assumed that a plurality of service operators participate in the system, each with the optimization terminal 100.

The maintenance server 101, an information processing device such as a commercially available workstation, is installed in, and operated by, the mobile carrier. The maintenance server 101 has the function to collect statistical information, such as the trial handover frequency of/in the cells under control of the existing wireless base station, from the wireless network control station 102 and the limitation function (authentication function) to permit only service operators, which have passed the evaluation in a bid or a trial for the optimization service and agreed to observe confidentiality, to access the addition information including the collected statistical information.

.
The additional information is provided to the service operator via a special folder prepared for each service operator on the maintenance server 101 side. The update of the additional information is notified by way of a mailing list in which the service operators, each of which has access to the information, are registered.

In addition to the functions described above, the maintenance server 101 has a function to send a cell setting command to the wireless network control station 102, based on the neighboring cell list(s) received from the optimization terminal 100 of a service operator selected from the service operators which are permitted access, for updating the neighboring cell lists each stored in the wireless base stations 103 and 104.

Although multiple servers and client terminals may be used, one for each of the functions described above, to distribute the load depending upon the information amount and the processing amount to be processed by the maintenance server 101, it is assumed in the description below that only the maintenance server 101 is used.

The wireless network control station 102 has a function to receive a cell setting command from the maintenance server 101 and, based on the received command, control the setting of all cells under control of the wireless base stations that are, in turn, under control of the wireless network control station 102. The wireless network control station 102 also has a function to collect the setting information and the statistical information on the cells in operation and send the collected information to the maintenance server 101.

The wireless base stations 103 and 104 have a function to wirelessly communicate with the mobile terminals located in the cells under control of those wireless base stations according to the control operation performed by the wireless network control station 102. Cells 1-3 represent cells under control of the wireless base station 103 that is newly added, and cells 4-5 represent the cells under control of the existing wireless base station 104.

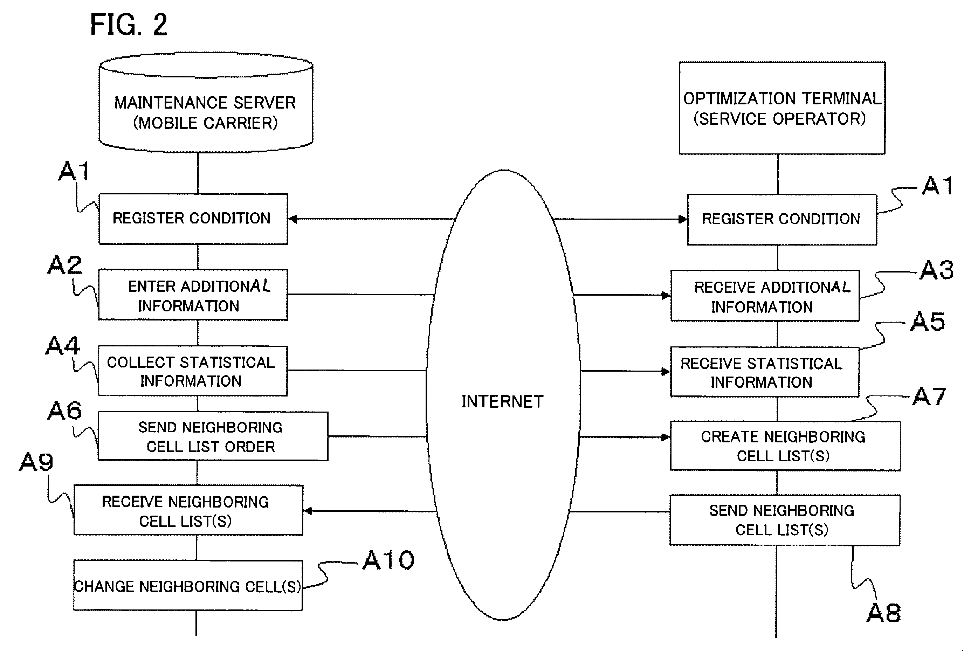

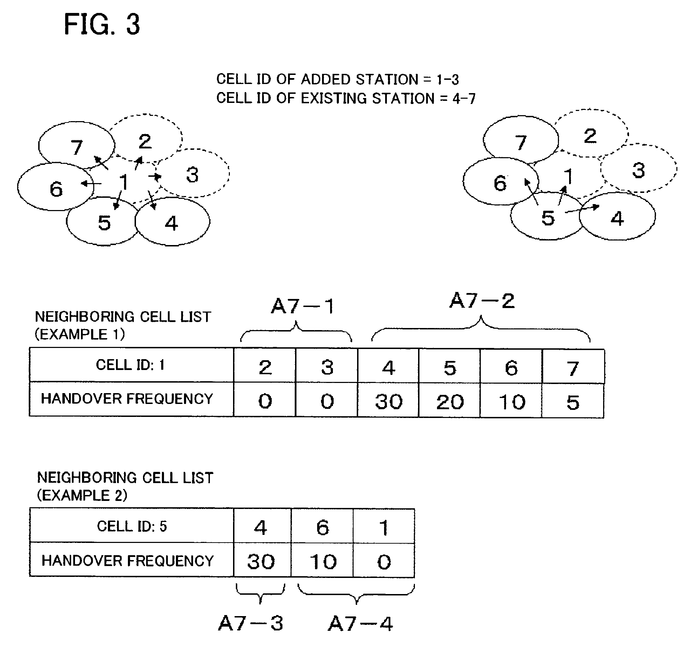

Next, the following describes the operation of this exemplary embodiment in more detail with reference to the drawings. FIG. 2 is a flowchart showing a sequence of operations from the time the creation of at least a neighboring cell list is requested to the time the neighboring cell list(s) is updated. FIG. 3 is a diagram showing an example of neighboring cell list creation processing performed on the optimization terminal.

Referring to FIG. 2, a mobile carrier first sends an electronic mail to the service operators, who are prepared to provide the neighboring cell list optimization service, to notify them about the general conditions such as the target area, (base station) additional input/output data transmission/reception method (method of access to the maintenance server 101, special mailing address, data format, and so on), and the estimated price.

The mobile carrier selects among the service operators, any service operator who responds to the electronic mail with a response indicating an intention to "participate", according to a predetermined selection criterion and registers the content of agreement with the responded service operator in the maintenance server 101. The responded service operator also registers the content of agreement as well as the method of access to the maintenance server 101, the special mailing address, and the data format, in the optimization terminal 100 (step A1 in FIG. 2).

Next, the mobile carrier registers the detailed addition al information, such as the expected addition date, the base station to be added and the cell numbers, the setting of existing base station(s), and so on, in a special folder in the maintenance server 101 and notifies the service operator, who has shown the intent to provide the service, via the special mailing list that the registered additional information has been updated (step A2 in FIG. 2).

The optimization terminal 100 accesses the special folder in the maintenance server 101 via the Internet according to the operation of the service operator that has received the notification and downloads the additional information (step A3 in FIG. 2). If the additional information is incomplete, the service operator sends a request to the mobile carrier by way of the special mailing list to request it to add data on the incomplete information. Conversely, if the additional information is complete, the service operator sends a reception confirmation notification, indicating that the additional information has been received, to the mobile carrier using the special mailing list.

Next, the maintenance server (mobile carrier) 101 saves the statistical information on the wireless base station 103 to be added, which is selected from the statistical information regularly auto-collected from the existing wireless base station 104 via the wireless network control station 102, into the special folder in the maintenance server 101 (step A4 in FIG. 2). The registration of statistical information is also notified from the maintenance server 101 (mobile carrier) to the service operator via the special mailing list.

The optimization terminal 100 accesses the special folder in the maintenance server 101 via the Internet according to the operation of the service operator that has received the notification and downloads the statistical information (step A5 in FIG. 2). If the statistical information is incomplete, the service operator sends a request to the maintenance server 101 via the special mailing list to request it to add data on the incomplete information. Conversely, if the statistical information is complete, the service operator sends a reception confirmation notification, indicating that the statistical information has been received, to the maintenance server 101 via the special mailing list.

Next, the maintenance server 101 (mobile carrier) sends an order to the service operator by way of the special mailing list to request it to create neighboring cell list(s) (step A6 in FIG. 2). The order may include information within the range of the content specified by the original agreement. For example, the wireless base station which is necessary to optimize the neighboring cell list(s) and the requested date (or time) for completion of the service (lead time) are specified for the order. If this order content is incomplete, the service operator and the mobile carrier communicate with each other by way of the special mailing list to make adjustment. Conversely, if the order content is complete, the service operator sends an order confirmation notification, indicating that the order is correctly received, to the mobile carrier by way of the special mailing list.

The optimization terminal 100, which is operated by the service operator that has received the order, creates the neighboring cell list(s) based on the order content and the additional information and statistical information downloaded from the maintenance server 101 (step A7 in FIG. 2).

The following describes the neighboring cell list creation processing performed on the optimization terminal 100 with reference to FIG. 3. First, the additional information indicates the location relation among the cells in a target area (see the top in FIG. 3). The optimization terminal 100 can create at least a neighboring cell list from this location relation by sequentially selecting the cells near to the cell(s) of the added station.

If it is difficult to determine the priority from this location relation alone, the statistical information can be used to increase the priority of a cell for which trial handover is performed more frequently. Note that cells 1-3 associated with the added station, which are not in operation, have no statistical information and, so, the trial handover frequency is assumed to be 0.

The neighboring cell list (example 1) in FIG. 3 is a neighboring cell list for cell 1 that is added when the wireless base station 103 is added. In the neighboring cell list (example 1), neighboring cells 2-3, which are neighboring cells under control of the same wireless base station as that of cell 1, are ranked highest because they are the nearest cells (see A7-1 in FIG. 3). Next, neighboring cells 4-7, which are neighboring cells near to cell 1, are selected in descending order of trial handover frequency based on the statistical information (see A7-2 in FIG. 3).

The neighboring cell list (example 2) in FIG. 3 is a neighboring cell list of cell 5 under control of the existing wireless base station 104. In the neighboring cell list (example 2), too, neighboring cell 4, which is the neighboring cell under control of the same wireless base station as that of cell 5, is ranked highest because it is the nearest cell (see A7-3 in FIG. 3). Next, neighboring cells 1 and 6, which are other neighboring cells near to cell 5, are selected in descending order of trial handover frequency based on the statistical information (see A7-4 in FIG. 3). Of course, if any cell of some other existing wireless base station (not shown in FIG. 3) is near to cell 5, that cell may be ranked higher than cell 6 or cell 1 depending upon the trial handover frequency.

The neighboring cell lists for cell 2 and cell 3 are created, respectively, in the same way and, under the same condition, the neighboring cell list for cell 2 contains the order "1, 3, 7" and the neighboring cell list for cell 3 contains the order "1, 2, 4". The neighboring cell lists for cells 4, 6, and 7 are created in the same way and, under the same condition, the neighboring cell list for cell 4 contains the order "5, 6, 1", the neighboring cell list for cell 6 contains the order "7, 5, 1", and the neighboring cell list for cell 7 contains the order "6, 1, 2".

After the creation of the neighboring cell lists is completed as described above, the optimization terminal 100 uploads the created neighboring cell lists to the special folder in the maintenance server 101 via the Internet according to the operation performed by the service operator (step A8 in FIG. 2). After that, the service operator notifies the maintenance server 101 (mobile carrier) via the special mailing list that the creation of the neighboring cell lists has been completed.

After that, the mobile carrier checks the content of the neighboring cell lists registered in the special folder in the maintenance server 101 (step A9 in FIG. 2). If the neighboring cell lists are incomplete, the service operator and the mobile carrier communicate with each other via the special mailing list to make adjustment. If the content of the neighboring cell lists is complete, the mobile carrier notifies the service operator via the special mailing list that the checking of the neighboring cell lists has been completed and, at the same time, performs the payment processing for the neighboring cell list creation cost according to the condition that was agreed upon in step A1 in FIG. 2.

Finally, based on the received neighboring cell lists, the mobile carrier sends the cell change command to the maintenance server 101 for changing the neighboring cell(s) to complete the updating of the neighboring cell(s) of each wireless base station via the wireless network control station 102 (FIG. 1) (step A10 in FIG. 2).

The neighboring cell list setting method in this exemplary embodiment can optimize the neighboring cell lists before an added station starts the actual operation as described above. Thus, the method eliminates the need for extensively changing the neighboring cell lists by conducting a running test using a measuring vehicle and increases the optimization efficiency using the analysis result.

In addition, a third party (service operator), which is neither a mobile carrier nor a provider (vendor) of wireless base station apparatus, performs the optimization processing of the neighboring cell lists in the exemplary embodiment described above. This method allows the neighboring cells to be set objectively without adding any more wireless base stations so that the current resources can be fully utilized.
Note that, after updating the neighboring cell list(s), the operation of the added wireless base station 103 may be started and, as necessary, the running test may be made using a measuring vehicle, for which the present invention may be also utilized with advantage, too.

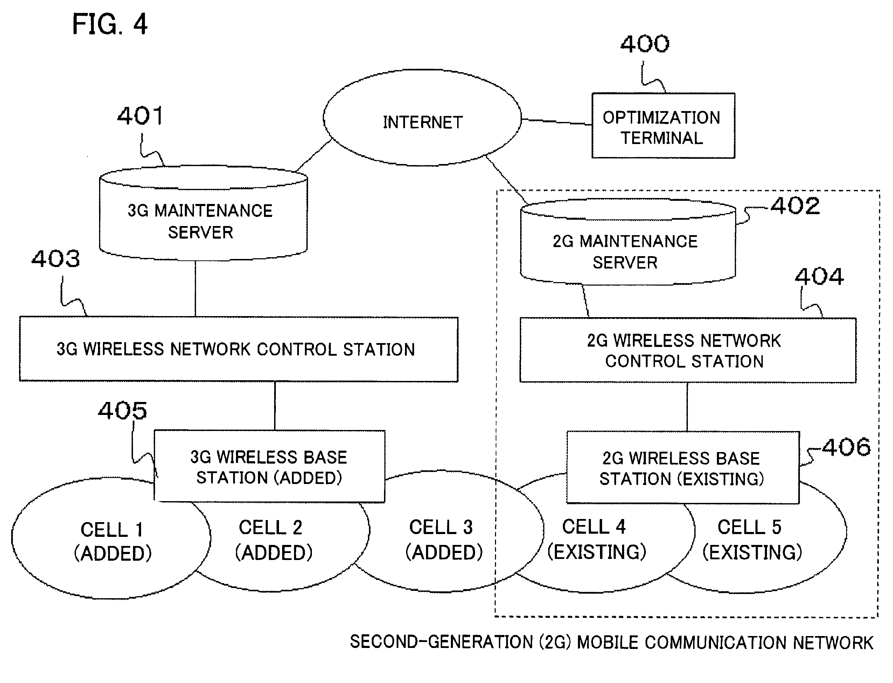

Next, with reference to the drawings, a second exemplary embodiment of the present invention will be described in which neighboring cell lists, including neighboring cells of a different mobile communication network, can be created. FIG. 4 is a diagram showing the general configuration of the second exemplary embodiment of the present invention. An optimization terminal 400, a 3G maintenance server 401, a 3G wireless network control station 403, and a 3G wireless base station 405 in FIG. 4 correspond respectively to the optimization terminal 100, the maintenance server 101, the wireless network control station 102, and the wireless base station 103 to be added in the first exemplary embodiment.

A second-generation (2G) mobile wireless network comprises a 2G maintenance server 402, a 2G wireless network control station 404, and a 2G wireless base station 406. Like the maintenance server 101 described above, the 2G maintenance server 402 has a function to collect statistical information, such as the trial handover frequency in second-generation cells 4 and 5, from the 2G wireless network control station 404 and a limitation function (authentication function) to permit only the predetermined service operators to access the additional information including the collected statistical information.

The 2G wireless network control station 404 has a function to receive a cell setting command from the 2G maintenance server 402 and, based on the received command, control the setting of all cells under control of the 2G wireless base station that is, in turn, under control of the 2G wireless network control station 404. The 2G wireless network control station 404 also has the function to collect the setting information and the statistical information on the cells in operation and send the collected information to the 2G maintenance server 402.

The existing 2G wireless base station 406 has a function to wirelessly communicate with the mobile terminals in the cell(s) under control of the wireless base station according to the control operation performed by the 2G wireless network control station 404. Cells 4-5 represent cells under control of the 2G wireless base station 406.

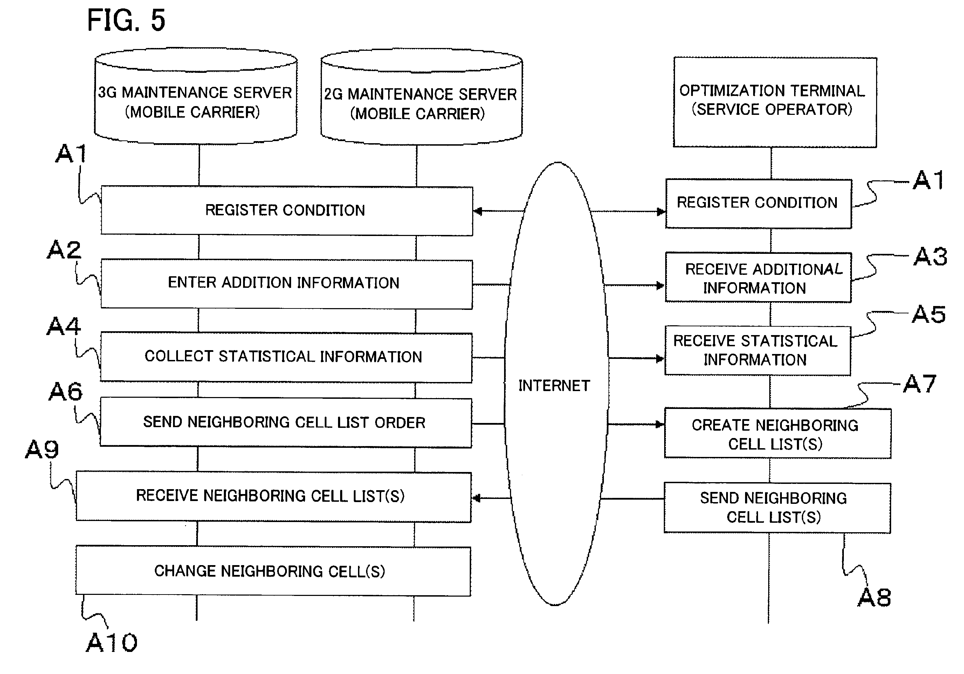

Next, the following describes the operation of this exemplary embodiment more in detail with reference to the flowchart in FIG. 5. Referring to FIG. 5, the mobile carrier first sends an electronic mail to the service operators, who desire to provide the neighboring cell list optimization service, to notify them about the general conditions such as the target area, (base station) addition plan, input/output data transmission/reception method (method of access to the 3G maintenance server 401 and 2G maintenance server 402, special mailing address, data format, and so on) and the estimated price.

The mobile carrier selects any one service operator from the service operators, who has responded to the electronic mail with a response indicating an intention to "participate", according to a predetermined selection criterion and registers the content of agreement with the service operators in the 3G maintenance server 401 and 2G maintenance server 402, respectively. The selected service operator (i.e., participant) also registers the content of agreement as well as the method of access to the 3G maintenance server 401 and 2G maintenance server 402, the special mailing address, and the data format, in the optimization terminal 400 (step A1 in FIG. 5).

Next, the mobile carrier registers the detailed addition al information, such as the expected addition date, the base station(s) to be added and the cell numbers, the setting of existing base stations, and so on, in the special folder in the 3G maintenance server 401 and 2G maintenance server 402 and notifies the selected service operator or participant, who has shown the intent to provide the service, via the special mailing list that the registered additional information has been updated (step A2 in FIG. 5).

The additional information includes information on the location and the cell initial setting of the 3G wireless base station 405 to be added and information on the location and the cell setting of the 2G wireless base station 406 that is in operation near the 3G wireless base station 405.

The optimization terminal 400 accesses the special folder in the 3G maintenance server 401 and 2G maintenance server 402 via the Internet according to the operation of the service operator that has received the notification, and receives downloads the addition information followed by downloading (step A3 in FIG. 5). If the additional information is incomplete, the service operator sends a request to the mobile carrier by way of the special mailing list to request it to add data on the incomplete information. Conversely, if the addition al information is complete, the service operator sends a reception confirmation notification, indicating that the additional information has been received, to the mobile carrier by way of the special mailing list.

Next, the 2G maintenance server 402 saves the statistical information on the 3G wireless base station 405 to be added, which is selected from the statistical information regularly auto-collected from the existing 2G wireless base station 406 via the 2G wireless network control station 404, into a special folder in the 2G maintenance server 402 (step A4 in FIG. 5). The registration of statistical information is also notified from the mobile carrier to the service operator by way of the special mailing list. Although not shown in FIG. 5, a step is included in which, if the 3G mobile communication network has an existing wireless base station, the 3G maintenance server 401 also saves the statistical information in the special folder in the same way.

The optimization terminal 400 accesses the special folder in the 2G maintenance server 402 and the 3G maintenance server 401 via the Internet according to the operation of the service operator that has received the notification and downloads the statistical information (step A5 in FIG. 5). If the statistical information is incomplete, the service operator sends a request to the mobile carrier via the special mailing list to request it to add data as to the incomplete information. Conversely, if the statistical information is complete, the service operator sends a reception confirmation notification, indicating that the statistical information has been received, to the mobile carrier via the special mailing list.

Next, the mobile carrier sends an order to the service operator via the special mailing list to request it to create the neighboring cell lists (step A6 in FIG. 5). The order may include information within the range of the content specified by the original agreement. For example, the wireless base station(s) targeted for creating the neighboring cell list(s), i.e., for optimization and the requested date for completion of the service (lead time) are specified for the order. If this order content is incomplete, the service operator and the mobile carrier communicate with each other via the special mailing list to make adjustment. Conversely, if the order content is complete, the service operator sends an order confirmation notification, indicating that the order is correctly received, to the mobile carrier via the special mailing list.

The optimization terminal 400, which is operated by the service operator that has received the order, creates at least a neighboring cell list based on the order content and the additional information and statistical information downloaded from the 3G maintenance server 401 or the 2G maintenance server 402 (step A7 in FIG. 5).

The neighboring cell list creation rule used in the neighboring cell list creation processing in this exemplary embodiment is the same as that described in the first exemplary embodiment. In addition, it is also possible to change the arrangement of the content of the neighboring cell list(s) based not only on whether cells are near to a cell of the added station or the trial handover frequency, but also on whether or not the cells neighboring each other belong to the same mobile communication network, or whether or not the type of the mobile communication network to which each of the cells belongs is the same.

After the creation of the neighboring cell list(s) is completed as described above, the optimization terminal 400 uploads the created neighboring cell list(s) to the special folder in the 3G maintenance server 401 and the 2G maintenance server 402 via the Internet according to the operation performed by the service operator (step A8 in FIG. 5). After that, the service operator notifies the mobile carrier via the special mailing list that the creation of the neighboring cell list(s) has been completed.

After that, the mobile carrier checks the content of the neighboring cell list(s) registered in the special folder in the 3G maintenance server 401 and the 2G maintenance server 402 (step A9 in FIG. 5). If the content of the neighboring cell list(s) is incomplete, the service operator and the mobile carrier communicate with each other via the special mailing list to make adjustment. If the content of the neighboring cell list(s) is complete, the mobile carrier notifies the service operator via the special mailing list that the checking of the neighboring cell list(s) has been completed and, at the same time, performs the payment processing for the neighboring cell list creation cost according to the condition that was agreed upon in step A1 in FIG. 5.

Finally, based on the received neighboring cell list(s), the mobile carrier sends the cell change command to the 3G maintenance server 401 and the 2G maintenance server 402 for changing the neighboring cell(s) to complete the updating of setting of the neighboring cell(s) of the 3G wireless base station 405 and the 2G wireless base station 406 (step A10 in FIG. 5).

As described above, the present invention is applicable also to the optimization of the neighboring cell lists in an environment where the cells of a plurality of different types of mobile communication network(s) are distributed in a mixed configuration provided that the handover can be performed across those mobile communication networks.

Although the preferred exemplary embodiments of the present invention have been described, the technical scope of the present invention is not limited to the description of the exemplary embodiments described above but various modifications may be added according to the specification prepared by mobile carriers. For example, though a cell for which trial handover is performed frequently is ranked high in the neighboring cell list in the description above, other statistical information may also be used to determine the cell priority.

Although exemplary embodiments of cell addition in a third-generation (3G) mobile communication network (first exemplary embodiment) and 3G cell addition to a second-generation (2G) mobile communication network (second exemplary embodiment) have been described in the exemplary embodiments described above, the present invention is applicable also when cells are added in a 2G mobile communication network, or when 3G cells having a different radio frequency (or frequencies) are added in a third-generation (3G) mobile communication network.

In the exemplary embodiments described above, the neighboring cell lists are optimized when a wireless base station is added. In view of the principle of the present invention, the present invention is applicable not only when a wireless base station is added but also when the area of a wireless base station is specified where the network quality improvement is required and there is a need for reviewing and optimizing the neighboring cell setting of the areas near to that area.

Although a mailing list is used as means of communication between the optimization terminal 100 and the maintenance server 101 in the exemplary embodiment described above, various types of communication are possible via a general electronic mail or an Internet site provided by a mobile carrier. It is of course possible to build an intranet or dedicated communication system.
It should be noted that other objects, features and aspects of the present invention will become apparent in the entire disclosure and that modifications from the disclosed embodiments may be done without departing the scope of the present invention claimed as appended herewith.
Also it should be noted that any combination of the disclosed and/or claimed elements, matters and/or items may fall under the modifications aforementioned.

## Claims

1. A neighboring cell list setting method for use in a mobile communication network where a mobile terminal performs a neighboring cell search based on at least a neighboring cell list received from a wireless base station, said neighboring cell list setting method comprising:
generating, by a neighboring cell setting terminal connected to said mobile communication network, at least a neighboring cell list of any specified wireless base station and wireless base station(s) neighboring to the specified wireless base station, based on a location relation between the specified wireless base station and wireless base station(s) around the specified wireless base station, and sending the generated neighboring cell list(s) to a maintenance server of said mobile communication network; and
updating, by said maintenance server, the neighboring cell list(s) of each of said wireless base station(s) using the neighboring cell list(s) received from said neighboring cell setting terminal.

2. The neighboring cell list setting method as defined by claim 1 wherein
the location relation between the specified wireless base station and the wireless base station(s) around the specified wireless base station is provided as additional information on the specified wireless base station,
said neighboring cell setting terminal generates and sends at least a neighboring cell list that is set when at least one wireless base station is added, and
said maintenance server uses the neighboring cell list(s) to update the neighboring cell list(s) of said added wireless base station and wireless base station(s) neighboring to the added wireless base stations, respectively.

3. The neighboring cell list setting method as defined by claim 1 or 2 wherein
said neighboring cell setting terminal uses not only the location relation between the specified wireless base station and the wireless base station(s) around the specified wireless base station but also statistical information on existing cells around the specified wireless base station to determine the order of cells in the neighboring cell list(s).

4. The neighboring cell list setting method as defined by claim 3 wherein
the statistical information includes information on a trial handover frequency of each mobile terminal in each cell, and
said neighboring cell setting terminal ranks a cell, whose trial handover frequency is higher, in a higher position in the neighboring cell list(s).

5. The neighboring cell list setting method as defined by any one of claims 1-4 wherein
said neighboring cell setting terminal generates at least a neighboring cell list including cells of a plurality of mobile communication networks and sends the generated neighboring cell list(s) to a maintenance server of each of said mobile communication networks, and
the maintenance server of each of said mobile communication networks uses the neighboring cell list(s) to update the neighboring cell list(s) in each of said wireless base station(s).

6. A neighboring cell setting terminal connected to a mobile communication network where a mobile terminal performs a neighboring cell search based on at least a neighboring cell list received from any wireless base station, said neighboring cell setting terminal comprising:
neighboring cell list generation means for generating at least a neighboring cell list of a specified wireless base station and wireless base station(s) neighboring to the specified wireless base station based on a location relation between the specified wireless base station and the wireless base station(s) around the specified wireless base station; and
neighboring cell list sending means for sending the neighboring cell list(s) of each wireless base station(s) to a maintenance server of said mobile communication network.

7. The neighboring cell setting terminal as defined by claim 6 wherein
the location relation between the specified wireless base station and the wireless base station(s) around the specified wireless base station is provided as additional information on the specified wireless base station, and
said neighboring cell setting terminal generates and sends at least a neighboring cell list that is set when a wireless base station is added.

8. The neighboring cell setting terminal as defined by claim 6 or 7 wherein
said neighboring cell list generation means uses not only the location relation between the specified wireless base station and wireless base station(s) around the specified wireless base station, but also statistical information on existing cells around the specified wireless base station to determine the order of cells in the neighboring cell list(s).

9. The neighboring cell setting terminal as defined by claim 8 wherein
the statistical information includes information on a trial handover frequency of each mobile terminal in each cell, and
said neighboring cell list generation means ranks a cell, whose trial handover frequency is higher, in a higher position in the neighboring cell list(s).

10. The neighboring cell setting terminal as defined by any one of claims 6-9 wherein
said neighboring cell setting terminal is connected to a plurality of mobile communication networks,
said neighboring cell list generation means generates at least a neighboring cell list including cells of said plurality of mobile communication networks, and
said neighboring cell list sending means sends the neighboring cell list to a maintenance server of each of said mobile communication networks.

11. A maintenance server that provides a specification of a wireless base station and a location relation of the wireless base station(s) around said wireless base station to the neighboring cell setting terminal as defined by any one of claims 6-10.

12. A maintenance server that collects statistical information on existing cells of each wireless base station, and
provides statistical information, related to the specified wireless base station, to the neighboring cell setting terminal as defined by any one of claims 8-10.

13. A mobile communication network to which the neighboring cell setting terminal as defined by any one of claims 6-10 is connected.
